Europäisches Patentamt

European Patent Office

Office européen des brevets

(11) Veröffentlichungsnummer: **0 328 513**
**A1**

## (12) EUROPÄISCHE PATENTANMELDUNG

(21) Anmeldenummer: **89890035.2**

(22) Anmeldetag: **09.02.89**

(51) Int. Cl.⁴: **B 60 T 3/00**

(30) Priorität: **10.02.88 AT 287/88**

(43) Veröffentlichungstag der Anmeldung:
**16.08.89 Patentblatt 89/33**

(84) Benannte Vertragsstaaten:
**AT BE CH DE ES FR GB GR IT LI LU NL SE**

(71) Anmelder: **Katschnig, Helmut, Dr. med.**
**Teuffenbachstrasse 43**
**A-8750 Judenburg Steiermark (AT)**

(72) Erfinder: **Katschnig, Helmut, Dr. med.**
**Teuffenbachstrasse 43**
**A-8750 Judenburg Steiermark (AT)**

(74) Vertreter: **Itze, Peter, Dipl.-Ing. et al**
**Patentanwälte Casati, Wilhelm, Dipl.-Ing. Itze, Peter,**
**Dipl.-Ing. Amerlingstrasse 8**
**A-1061 Wien (AT)**

(54) **Bremskeil.**

(57) Die Erfindung betrifft einen Bremskeil für Räder mit einer Auflagefläche und einer, insbesondere gekrümmten Anschlagfläche für die Lauffläche des Rades, wobei die Anschlagfläche mit der Auflagefläche über eine im Bereich der Keilschneide angeordnete Achse schwenkbar verbunden ist, wobei in an sich bekannter Weise die Auflagefläche 1 mit wenigstens einer Durchbrechung 3 versehen ist, durch welche wenigstens ein Stift 5 durch Druck auf die Anschlagfläche 2 hindurchschiebbar ist, und daß die Stifte 5 über einen etwa parallel zu ihnen verlaufenden Träger 4 verschiebbar sind, der etwa tangential in bezug auf den Schwenkkreis der Anschlagfläche 2 verläuft.

FIG. 1

EP 0 328 513 A1

**Beschreibung**

**Bremskeil**

Die Erfindung betrifft einen Bremskeil für Räder mit einer Auflagefläche und einer, insbes. gekrümmten Anschlagfläche für die Lauffläche des Rades, wobei die Anschlagfläche mit der Auflagefläche über eine im Bereich der Keilschneide angeordnete Achse schwenkbar verbunden ist.

Bei der bekannten Ausbildung handelt es sich um einen zusammenklappbaren Hemmschuh, bei welchem die Anschlagfläche zur Auflagefläche hin geklappt werden kann, damit der Hemmschuh in nicht benütztem Zustand wenig Platz erfordert. Für die Gebrauchsstellung wird die Auflagefläche und die Anschlagfläche voneinander weggeklappt, wobei zwischen die einander zugekehrten Seiten der beiden Flächen eine Strebe aufgestellt wird. Dabei sind an der Auflagefläche nach außen herausgedrückte V-förmige Sporen vorgesehen, die ein Weggleiten des Bremskeiles verhindern bzw. erschweren sollen. Diese Sporen sind jedoch nur geringfügig aus der Auflagefläche herausgepreßt, u.zw. deshalb, um bei nicht gebrauchtem Keil ein allzuweites Hervorragen der Sporen und damit einer Platzverschwenkung vorzubeugen. Auch ist die Verletzungsgefahr an den herausgepreßten Sporen groß.

Der Erfindung liegt die Aufgabe zugrunde, bei Auflaufen des Rades des zu bremsenden Fahrzeuges einen Druck auf Verkrallorgane auszuüben, welche in den Boden hineingepreßt werden, um so einen entsprechenden Halt zu erzielen.

Erfindungsgemäß wird diese Aufgabe dadurch gelöst, daß in an sich bekannter Weise die Auflagefläche mit wenigstens einer Durchbrechung versehen ist, durch welche wenigstens ein Stift durch Druck auf die Anschlagfläche hindurchschiebbar ist, und daß die Stifte über einen, etwa parallel zu ihnen verlaufenden Träger verschiebbar sind, der etwa tangential in bezug auf den Schwenkkreis der Anschlagfläche verläuft. Wie angeführt, ist es dabei an sich bekannt, einen Stift durch eine Durchbrechung der Auflagefläche durch den Druck auf die Anschlagfläche in den Boden zu pressen. Bei dieser bekannten Ausbildung ist die Anschlagfläche an einem Träger starr angeordnet, welcher in Bezug auf die Auflagefläche schwenkbar gelagert ist. Dieses Schwenklager liegt dabei an dem der Keilschneide abgewandten Ende der Auflagefläche. Weiters ist bei dieser bekannten Ausbildung die Anschlagfläche geteilt ausgebildet, sodaß die Auflagefläche einen Teil der Keilfläche bzw. der Anschlagfläche bildet und der Oberteil der Anschlagfläche über den Träger nach unten geschwenkt werden kann. Es muß dabei das Anlaufen des Rades so erfolgen, daß es zuerst auf den nach oben verschwenkten Bereich der Anschlagfläche auftrifft, um dann durch das Abrollen den nach oben verschwenkten Bereich der Anschlagfläche über den Träger um die Schwenkachse so zu verschwenken, daß der Stift durch die Durchbrechung der Auflagefläche hindurchtreten und in das Erdreich eindringen kann. Die Ausbildung des Keiles ist damit zu einem großen Teil von dem Durchmesser des anlaufenden Rades abhängig, da beispielsweise bei einem zu kleinen Rad dieses zuerst auf den Keilbereich der Auflagefläche hinaufläuft, um dann auf die Anschlagfläche zu treffen. In dieser Phase ist aber ohneweiters ein Wegrutschen des Bremskeiles möglich, da bei Auflaufen des Rades auf den Keilbereich der Auflagefläche ein Eingreifen des Stiftes in den Boden nicht möglich ist, da kein Druck auf den nach oben geschwenkten Bereich der Anschlagfläche vorhanden ist bzw. auf jene aufgebracht werden kann. Dadurch, daß die Stifte über einen etwa parallel zu ihnen verlaufenden Träger verschiebbar sind, der etwa tangential in bezug auf den Schwenkkreis der Anschlagfläche verläuft, wird eine besonders wirkungsvolle Kraftausübung im Sinne eines Eintreibens der Stifte in den Untergrund erzielt.

In weiterer Ausgestaltung des erfindungsgemäßen Bremskeiles kann vorgesehen werden, daß der Träger in einem mit der Rückseite der Auflagefläche fest verbundenen Gleitlager verschiebbar gelagert ist und mit seinem freien Ende in einem an der Rückseite der Anschlagfläche angeordneten Langloch gelagert ist. Auf diese Weise wird eine einwandfreie Führung der Stifte erreicht.

In bevorzugter Weise stehen bei dem erfindungsgemäßen Bremskeil die Stifte von einer gemeinsamen Platte ab, die in einem geschlossenen Gehäuse an der Rückseite der Auflagefläche angeordnet ist. Dadurch ist eine Sicherheit gegen Vereisen weitestgehend gegeben.

Die Erfindung wird nachstehend anhand der Zeichnung näher erläutert. Es zeigt,

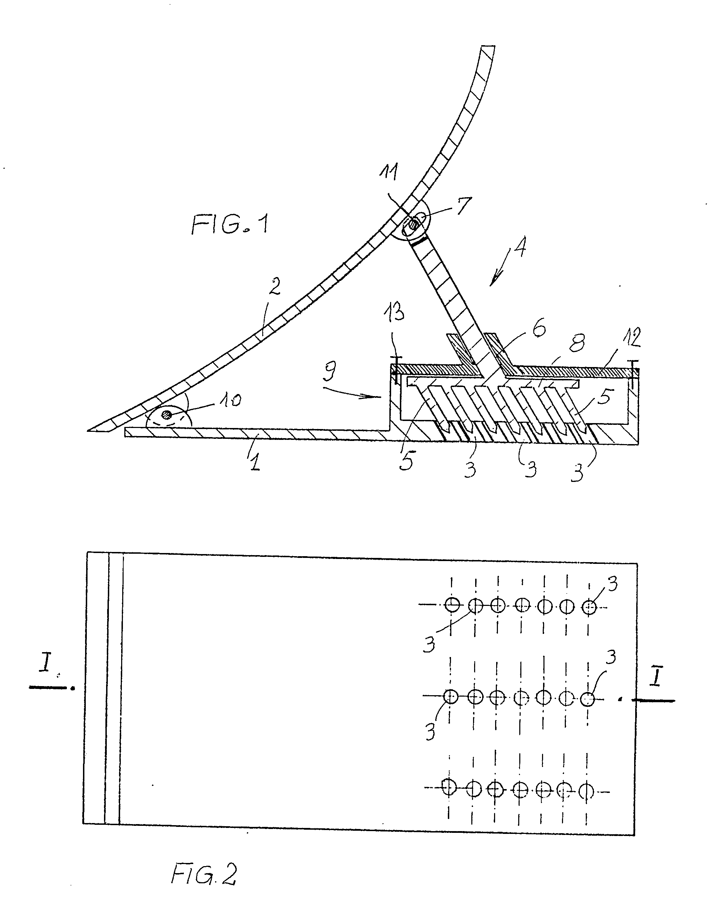

Fig. 1 einen Schnitt entlang der Linie I-I der

Fig. 2, die eine Untersicht des erfindungsgemäßen Bremskeiles veranschaulicht.

Der erfindungsgemäß ausgebildete Bremskeil besitzt eine Auflagefläche, die die Aufstandsfläche des Bremskeiles auf der Fahrstraße bildet und weiters eine Anschlagfläche 2 für die Lauffläche des Rades. Die Auflagefläche 1 und die Anschlagfläche 2 sind durch ein Schwenklager 10 im Bereich des Scheitels des Bremskeiles schwenkbar miteinander verbunden. Die Auflagefläche 1 ist mit Durchbrechungen 3 versehen, deren Achse gegen die Ebene der Auflagefläche 1 geneigt ist. Zwischen der Anschlagfläche 2 und der Auflagefläche 1 befindet sich ein Träger 4 für Stifte 5, die mit zugespitzten Enden versehen sind. Die Stifte greifen in die Durchbrechungen 3 der Auflagefläche ein und sind über den Träger 4 an der Rückseite der Anschlagfläche 2 abgestützt. Wird die Anschlagfläche 2 auf die Auflagefläche 1 zu verschwenkt, so treten durch diese Abstützung die Stifte 5 aus den Durchbrechungen aus und erreichen eine Stellung, in der sie die Auflagefläche 1 überragen. Um eine günstige und vor allem sichere Führung der Stifte 5 zu erreichen, ist der Träger 4 in einem mit der Rückseite der Auflagefläche 1 fest verbundenen Gleitlager 6 verschiebbar gelagert und mit seinem freien Ende in einem Langloch 7 gelagert, welches an der Rückseite der Anschlagfläche 2 angeordnet ist. Das freie Ende des Trägers 4 kann dabei als Gabel ausgebildet sein, wobei der Raum zwischen den Wangen der Gabel von einem Bolzen 11 durchsetzt ist.

Die Stifte 5 stehen von einer gemeinsamen Platte 8 ab, die in einem geschlossenen Gehäuse 9 an der Rückseite der Auflagefläche 1 angeordnet ist. Das Gehäuse 9 ist dabei durch einen Deckel 12 verschlossen, der mittels Schrauben 13 mit den Seitenwänden des Gehäuses fest verbunden ist. Im Deckel 12 befindet sich auch das Gleitlager 6 für den Träger 4 der Stifte 5.

## Patentansprüche

1. Bremskeil für Räder mit einer Auflagefläche und einer, insbesondere gekrümmten Anschlagfläche für die Lauffläche des Rades, wobei die Anschlagfläche mit der Auflagefläche über eine im Bereich der Keilschneide angeordnete Achse schwenkbar verbunden ist, dadurch gekennzeichnet, daß in an sich bekannter Weise die Auflagefläche (1) mit wenigstens einer Durchbrechung (3) versehen ist, durch welche wenigstens ein Stift (5) durch Druck auf die Anschlagfläche (2) hindurchschiebbar ist, und daß die Stifte (5) über einen etwa parallel zu ihnen verlaufenden Träger (4) verschiebbar sind, der etwa tangential in bezug auf den Schwenkkreis der Anschlagfläche (2) verläuft.

2. Bremskeil nach Anspruch 1, dadurch gekennzeichnet, daß der Träger (4) in einem mit der Rückseite der Auflagefläche (1) fest verbundenen Gleitlager (6) verschiebbar gelagert und mit seinem freien Ende in einem an der Rückseite der Anschlagfläche (2) angeordneten Langloch (7) gelagert ist.

3. Bremskeil nach Anspruch 1 oder 2, dadurch gekennzeichnet, daß die Stifte (5) von einer gemeinsamen Platte (8) abstehen, die in einem geschlossenen Gehäuse (9) an der Rückseite der Auflagefläche (1) angeordnet ist.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | US-A-2 903 094 (ANSERSEN) <br> * Figuren 1-7 * <br> --- | 1 | B 60 T 3/00 |
| A | US-A-2 237 214 (BURKART) <br> --- | | |
| A | US-A-3 504 880 (TOMS) <br> ----- | | |

RECHERCHIERTE SACHGEBIETE (Int. Cl.3)

B 60 T 3/00

Der vorliegende Recherchenbericht wurde für alle Patentansprüche erstellt

| Recherchenort | Abschlußdatum der Recherche | Prüfer |
|---|---|---|
| BERLIN | 13-04-1989 | LUDWIG H J |